# EUROPÄISCHE PATENTANMELDUNG

(11) **EP 3 715 335 A1**
(43) Veröffentlichungstag der Anmeldung: **30.09.2020**
(21) Anmeldenummer: 19184890.2
(22) Anmeldetag: 08.07.2019
(51) Int. Cl.: C02F 1/42, B01J 41/02, C23C 22/00, C23C 22/34, C23C 22/86, B01J 47/028, C02F 101/14, C02F 101/20, C02F 103/34

(54) **OBERFLÄCHENBEHANDLUNGSANLAGE, PRÄKONDITIONIERUNGSEINRICHTUNG UND VERFAHREN ZUM AUFBEREITEN VON PROZESSMEDIUM UND/ODER SPÜLMEDIUM**

(30) Priorität: 26.07.2018 DE 102018118089; 30.11.2018 DE 102018130593
(71) Anmelder: Eisenmann SE, 71032 Böblingen (DE)
(72) Erfinder: Fröhlich, Georg, 75038 Oberderdingen (DE); Schulze, Jennifer, 71083 Herrenberg (DE)
(74) Vertreter: Ostertag & Partner Patentanwälte mbB

(57) **Zusammenfassung**

Eine Oberflächenbehandlungsanlage (10) zur Behandlung von Gegenständen (14), insbesondere Fahrzeugkarosserien, hat einen Dünnschichtkonversionsprozess (20), in welchem unter Verwendung eines Prozessmediums eine keramische Dünnschicht auf den Gegenständen (14) aufgebracht wird, einen anschließenden Spülschritt (22, 24), in welchem die Gegenstände (14) nach dem Dünnschichtkonversionsprozess (20) mit Spülmedium (33) gespült werden, und eine Entionisierungsanlage (28), die einen Kationenaustauscher (52) und einen nachgeschalteten Anionenaustauscher (54) aufweist und dazu eingerichtet ist, das Prozessmedium und/oder das Spülmedium (33) zu entionisieren. Für einen wirtschaftlichen Betrieb ist der Entionisierungsanlage (28) eine Präkonditionierungseinrichtung (30) vorgeschaltet, die dazu eingerichtet ist, Komplex-Anionen, welche bei dem Dünnschichtkonversionsprozess (20) entstehen und/oder vorhanden sind, aus dem Prozessmedium und/oder dem Spülmedium (33) zu entfernen. Ferner werden eine entsprechende Präkonditionierungseinrichtung sowie ein Verfahren zur Aufbereitung beschrieben.

## Beschreibung

### 1. Gebiet der Erfindung

Die Erfindung betrifft eine Oberflächenbehandlungsanlage zur Behandlung von Gegenständen, insbesondere Fahrzeugkarosserien, mit
a) einem Dünnschichtkonversionsprozess, in welchem unter Verwendung eines Prozessmediums eine keramische Dünnschicht auf den Gegenständen aufgebracht wird,
b) einem anschließenden Spülschritt, in welchem die Gegenstände nach dem Dünnschichtkonversionsprozess mit Spülmedium gespült werden, und
c) einer Entionisierungsanlage, die
   - einen Kationenaustauscher und einen nachgeschalteten Anionenaustauscher aufweist und
   - dazu eingerichtet ist, das Prozessmedium und/oder das Spülmedium zu entionisieren.

Ferner betrifft die Erfindung eine Präkonditioniereinrichtung sowie ein Verfahren zur Aufbereitung von Prozessmedium und/oder Spülmedium in der Oberflächenbehandlung von Gegenständen.

### 2. Beschreibung des Standes der Technik

Metallische Werkstoffe müssen vor schädigender Korrosion geschützt werden. Daher wird die Metalloberfläche von Gegenständen in Oberflächenbehandlungsanlagen üblicherweise mit Schutzüberzügen belegt. Hierfür haben sich Lacke bewährt, welche einen geschlossenen Film aus organischen Polymeren ausbilden.

Damit der Lack seine schützende Funktion ausüben kann, ist eine gute Haftung auf dem Werkstoff wichtig. Um eine verlässliche Lackhaftung sicherzustellen, müssen die metallischen Werkstoffe vor dem Lackieren vorbehandelt werden.

Die Vorbehandlung vor dem Lackieren umfasst üblicherweise Reinigungsverfahren zur Entfernung von Schmutzstoffen und/oder Beizverfahren zur Entfernung von beispielsweise Rostanhaftungen oder Zunderschichten sowie insbesondere ein Konversionsverfahren zur Aufbringung eines Haftgrundes auf der Werkstückoberfläche.

Für eine Zusammenfassung der eingesetzten Verfahren in der Vorbehandlung wird auf die noch unveröffentlichte DE 10 2018 115 289 der Anmelderin verwiesen.

Als bevorzugtes Konversionsverfahren wird seit Jahrzehnten die sogenannte Phosphatierung eingesetzt. Dabei wird durch Applikation von entsprechenden Chemikalien auf der Werkstückoberfläche eine Konversionsschicht aus Metallphosphaten ausgebildet. Diese Phosphatschicht bietet aufgrund ihrer strukturierten Oberfläche eine gute Haftung für die nachfolgenden Lackschichten. Die Korrosionsschutzeigenschaften eines Werkstückes mit einer Phosphatschicht und nachfolgenden Lackschichten sind um ein Vielfaches besser als ohne eine entsprechende Phosphatschicht.

In industriellen Oberflächenbehandlungsanlagen hat sich die nasschemische Vorbehandlung bewährt. Dort werden das Reinigungsverfahren, das Beizverfahren und/oder das Konversionsverfahren in mehreren hintereinandergeschalteten Behandlungszonen durchgeführt. Die zu behandelnden Gegenstände werden über ein Fördersystem durch die Zonen transportiert und dort mit den jeweiligen wässrigen Prozessmedien in Kontakt gebracht.

Die Kontaktierung erfolgt üblicherweise durch Besprühen oder Fluten mit dem Prozessmedium oder durch Eintauchen des Gegenstandes in ein Prozessbad oder Kombinationen hiervon. Unabhängig von der gewählten Prozessführung, die für jeden Anwendungsfall spezifisch ausgelegt wird, verbleiben nach der Kontaktierung des Gegenstandes mit dem Prozessmedium Reste des Prozessmediums auf der Oberfläche des Gegenstandes. Diese Reste werden in die nachfolgende Behandlungszone oder sogar in mehrere nachfolgende Behandlungszonen verschleppt, wodurch diese zunehmend verunreinigt wird bzw. werden. Die Verunreinigungen können nachteilige Auswirkungen auf den Behandlungsprozess in dieser nachfolgenden Behandlungszone haben.

Um schädliche Auswirkungen dieser Verschleppung auf nachfolgende Behandlungszonen zu minimieren, werden den Reinigungszonen, den Beizzonen und den Konversionszonen zusätzliche Spülzonen nachgeschaltet. In den Spülzonen werden die Gegenstände mit Rohwasser und/oder vollentsalztem Wasser (VE-Wasser) abgespült, wodurch die Reste des Prozessmediums im Spülwasser aufgenommen werden. Die sich im Spülwasser anreichernden Verunreinigungen können durch kontinuierliche oder durch intermittierende Ableitung als Abwasser ausgeschleust und durch Zufuhr von Frischwasser verdünnt werden.

Eine weitere Möglichkeit störende Verunreinigungen aus Spülwasser aber auch aus anderen Prozessflüssigkeiten der Vorbehandlung zu entfernen, ist der Einsatz von sogenannten Badpflegemaßnahmen. Verunreinigungen werden dabei durch technische Trennverfahren abgetrennt, wodurch ein verlängerter Einsatz des Prozessmediums und/oder des Spülmediums möglich ist. Hierdurch kann der Verbrauch an Prozessmedium, der Frischwasserverbrauch und/oder der Anfall von Abwasser gesenkt werden.

Eine häufig genutzte Badpflegemaßnahme stellt der Einsatz von Ionenaustauschern (IAT) dar. Mit dieser Technologie können Ionen entfernt werden, welche in Wasser gelöst vorliegen. Bei der Vorbehandlung ist es Stand der Technik, die letzten Spülzonen, also das Spülwasser, nach Anwendung der Phosphatierung als Konversionsverfahren über Ionenaustauscher zu reinigen. Dabei wird das zu reinigende Spülwasser zunächst durch einen Filter, zumeist einen Kiesfilter gefördert, um gröbere Partikel, wie beispielsweise Eisenhydroxidschlämme, zu entfernen. Anschließend durchströmt das Spülwasser einen Kationenaustauscher (KAT), in welchem sich eine Feststoffschüttung aus speziellen Partikeln befindet, welche dazu in der Lage sind, positiv geladene Ionen im Prozesswasser gegen Wasserstoff-Ionen (H⁺-Ionen) auszutauschen.

Nachfolgend strömt das Spülwasser durch einen Anionenaustauscher (ANT), in welchem in ähnlicher Weise negativ geladene Ionen gegen Hydroxid-Ionen (OH⁻-Ionen) ausgetauscht werden.

Die Wasserstoff-Ionen und die Hydroxid-Ionen neutralisieren sich gegenseitig zu normalem Wasser (H₂O), sodass nahezu ionenfreies Wasser den gesamten Ionenaustauscher verlässt.

Das gereinigte Spülwasser kann anschließend in die Spülzonen rückgeführt und damit erneut genutzt werden. Wenn ein Ionenaustauscher erschöpft ist, da er seine Aufnahmekapazität an Schmutz-Ionen erreicht hat, muss er regeneriert werden. Hierzu wird der Kationenaustauscher üblicherweise mit einer sauren Salzsäurelösung (HCl) regeneriert und der Anionenaustauscher mit einer alkalischen Natronlaugenlösung (NaOH).

In den letzten Jahren wird jedoch die Phosphatierung als etabliertes Konversionsverfahren in der Vorbehandlung durch alternative Verfahren auf Basis von Zirkonium-, Titan- und / oder Siliziumverbindungen ersetzt. Bei dieser sogenannten Dünnschichtkonversion wird unter Chemikalieneinwirkung eine nanoskalige keramische Konversionsschicht auf der Oberfläche des Gegenstandes erzeugt. Man spricht daher auch von einer Nanokeramik. Die ausgebildete Konversionsschicht besteht dann zum wesentlichen Teil aus oxidischen Verbindungen (z. B. ZrO₂, TiO₂, SiO₂).

Der Dünnschichtkonversionsprozess auf Basis von Zirkonium-, Titan- und/oder Siliziumverbindungen wird aber nicht nur zum vollständigen Ersatz der Phosphatierung verwendet sondern kann auch als Ergänzung zur klassischen Phosphatierung eingesetzt werden. In diesem Fall wird der Dünnschichtkonversionsprozess häufig auch als Nachspüllösung oder Passivierung bezeichnet. Vor allem bei der Oberflächenbehandlung von Fahrzeugkarosserien, wo höhere Qualitätsansprüche gelten, folgt häufig nach der Phosphatierung zunächst ein Spülen, dann eine als Passivierung bezeichnete Dünnschichtkonversion und dann wieder ein Spülen. Man nimmt an, dass durch die Passivierung freie Metallflächen, welche nicht ausreichend phosphatiert wurden, durch die Dünnschichtkonversion passiviert werden und sich dadurch der Korrosionsschutz erhöht. Die chemische Zusammensetzungen des die Phosphatierung ersetzenden Dünnschichtkonversionsprozesses und des die Phosphatierung ergänzenden Dünnschichtkonversionsprozesses ähneln sich weitestgehend.

### ZUSAMMENFASSUNG DER ERFINDUNG

Aufgabe der Erfindung ist es nun eine Oberflächenbehandlungsanlage für die Dünnschichtkonversionsbehandlung anzugeben, welche weiterhin die Aufbereitung von Prozessmedium und/oder Spülmedium erlaubt.

Erfindungsgemäß wird dies durch eine Oberflächenbehandlungsanlage eingangs genannter Art gelöst, bei welcher
d) der Entionisierungsanlage eine Präkonditionierungseinrichtung vorgeschaltet ist, die dazu eingerichtet ist, Komplex-Anionen, welche bei dem Dünnschichtkonversionsprozess entstehen und/oder vorhanden sind, aus dem Prozessmedium und/oder dem Spülmedium zu entfernen.

Die Erfinder haben erkannt, dass die bisherige Reihenschaltung von Kiesfilter, Kationenaustauscher und Anionenaustauscher in einer Entionisierungsanlage zur Aufbereitung von Prozessmedium und/oder Spülmedium nicht mehr problemlos möglich ist. Denn bei Anwendung der bekannten Techniken kommt es zu Feststoffausfällungen in der Entionisierungsanlage, was bereits nach wenigen Betriebszyklen die Verblockung der Ionenaustauscher hervorruft. Dies ist verbunden mit einem Anstieg des Strömungsdruckverlustes und einer Abnahme der lonenaustauschkapazität.

Die Erfinder haben weiter erkannt, dass die unerwünschte Feststoffausfällung in der Entionisierungsanlage insbesondere bei der Aufbereitung von Spülmedium auftritt, wenn im Spülmedium gelöste Zirkonium-, Titan- und/oder Siliziumverbindungen enthalten sind, die auf den Dünnschichtkonversionsprozess zurückgehen.

Darüber hinaus haben die Erfinder erkannt, dass die turnusmäßige Regeneration des Anionenaustauschers in der Entionisierungsanlage mit einer Natronlauge den Auslöser für die Feststoffausfällung darstellte. Analysen haben dann gezeigt, dass die ausgefällten Feststoffe in Wasser und/oder in Säure schwer lösliche (hydr-)oxidische Verbindungen von Zirkonium, Titan und/oder Silizium umfassten.

Es wurde erkannt, dass die bei dem Dünschichtkonversionsprozess verwendeten Verbindungen von Zirkonium (Zr), Titan (Ti) und Silizium (Si) wie beispielsweise Hexafluorzirkonsäure (H₂ZrF₆), Hexafluortitansäure (H₂TiF₆), Hexafluorkieselsäure (H₂SiF₆) und/oder deren leicht lösliche Alkalisalze, Amoniumsalze und/oder auch Dünnschichtkonversionslösungen in Form von (Organo-)-Silanen im Prozessmedium und/oder Spülmedium als wasserlösliche Komplexionen vorliegen. Beispielsweise sind dies [ZrF_{6]}²⁻-Ionen, [TiF_{6]}²⁻-Ionen und/ oder [SiF_{6]}²⁻-Ionen. Die Stabilität der Komplexionen ist jedoch abhängig vom pH-Wert der Lösung, wodurch bei der Regeneration des Anionenaustauschers in der Entionisierungsanlage mit Natronlauge die schwerlöslichen Hydroxide, Oxide und/oder Oxihydroxide als Feststoff ausfallen.

Erfindungsgemäß schlagen die Erfinder daher vor, eine Präkonditionierungseinrichtung vorzusehen, welche die Komplex-Anionen aus dem Prozessmedium und/oder dem Spülmedium entfernt bevor diese in die Entionisierungsanlage gelangen. Dadurch kann weiterhin eine übliche VE-Wasser-Anlage nach dem Stand der Technik als Entionisierungsanlage dienen. Deren Hauptzweck kann darin bestehen, VE-Wasser aus Rohwasser bzw. Frischwasser zu erzeugen. Durch die Präkonditionierungseinrichtung kann dabei quasi nebenbei auch Prozessmedium und/oder Spülmedium verwendet werden.

Entfernen der Komplex-Anionen umfasst im Sinne der Erfindung ein Entfernen der Komplex-Anionen zumindest in dem Maße, dass die Entionisierungsanlage wirtschaftlich betrieben werden kann.

Vorzugsweise ist vorgesehen, dass die Präkonditionierungseinrichtung einen Anionaustauscher aufweist, der dazu eingerichtet ist, die Komplex-Anionen gegen andere Anionen auszutauschen.

Wie nachfolgend noch deutlicher wird, stellt ein Anionenaustauscher als Präkonditionierungseinrichtung eine wirtschaftlich sinnvolle Möglichkeit dar, um die störenden Komplex-Anionen vor der Entionisierungsanlage zu entfernen. Diese anderen Anionen, die sogenannten Austauschionen, sollten insbesondere solche sein, die für die nachfolgende Entionisierungsanlage weder im Entionisierungsbetrieb noch bei der Regeneration problematisch sind, beispielsweise zu einer Verblockung des Austauschermaterials führen. In der Präkonditionierungseinrichtung findet somit eine Umsalzung des hindurchströmenden Prozessmediums und/oder Spülmediums statt. Bei der Umsalzung werden die störenden Komplex-Anionen durch andere Salz-Anionen (d.h. insbesondere nicht durch OH²⁻-Ionen) ausgetauscht, welche in der nachfolgenden VE-Wasseranlage keine Störungen verursachen.

Als Austauschanion kommen generell Säurerestanionen wie beispielsweise Phosphat (PO₄³⁻ ) und/oder Hydrogenphosphate (HPO₄²⁻ und H₂PO₄⁻) in Frage. Jedoch vorzugsweise Säurerestanionen starker bis mittelstarker Säuren, wie die Säurereste von Salzsäure, Salpetersäure oder Schwefelsäure. Beispielsweise können dies auch die Säurerestanionen lodid (I⁻), Bromid (Br⁻), Fluorid (F⁻) und/oder Hydrogensulfat (HSO₄⁻) sein. Besonders günstig ist der Austausch daher durch Chlorid (Cl⁻), Nitrat (NO₃⁻) oder Sulfat (SO₄²⁻).

Besonders vorteilhaft hat sich als Präkonditionierungseinrichtung ein Anionenaustauscher erwiesen, der ein schwachbasisches Austauschermaterial aufweist, das für den eigentlichen Prozess vorzugsweise mit Chlorid (Cl⁻) beladen ist. Die Entionisierungsanlage kann dabei weiterhin in üblicher Weise zunächst einen Kationenaustauscher mit stark saurem Austauschermaterial und anschließend einen Anionenaustauscher mit schwach basischem Austauschermaterial aufweisen.

Die Säurerestanionen verlassen die Präkonditionierungseinrichtung gemeinsam mit dem Prozessmedium und/oder dem Spülmedium.

Die Komplexanionen verbleiben im Anionenaustauscher, sodass dieser von Zeit zu Zeit regeneriert werden muss. Dies geschieht durch ein Regeneriermittel, welches das Säurerestanion in konzentrierter Form enthält. Das Regenerat, welches das Regeneriermittel und die Komplexanionen enthält, wird dabei abgeleitet und/oder gesammelt. Im günstigsten Fall können die Komplexanionen beispielsweise durch eine Regeneriereinrichtung abgetrennt werden und in den Dünnschichtkonversionsprozess zurückgeführt werden.

Vorzugsweise ist vorgesehen, dass der Anionenaustauscher der Präkonditionierungseinrichtung ein selektives Austauschermaterial umfasst.

Dadurch kann die Präkonditionierungseinrichtung nur auf den Austausch der Komplex-Anionen ausgelegt werden. Andere Anionen, die für die nachfolgende Entionisierungsanlage unproblematisch sind, können im Prozessmedium und/oder im Spülmedium verbleiben. Dies führt zu einer geringeren Belastung des Anionenaustauschers in der Präkonditionierungseinrichtung.

Vorzugsweise ist vorgesehen, dass der Anionenaustauscher der Präkonditionierungseinrichtung mit einem Regeneriermittel regeneriert wird, dass einen pH-Wert von weniger als circa 6 hat.

Dadurch, dass der Anionenaustauscher der Präkonditionierungseinrichtung im Sauren regeneriert wird, fallen die Komplex-Anionen nicht aus sondern liegen in gelöster Form im Regenerat vor. Dazu sollte das Regenerierungsmittel vorzugsweise Säurerestionen starker Säuren aufweisen. Säurerestionen starker Säuren (wie beispielsweise Salzsäure HCl; Salpetersäure HNO₃ oder Schwefelsäure H₂SO₄) verschieben den pH-Wert nicht, wohingegen Säurerestionen mittelstarker bzw. schwacher Säuren den pH-Wert erhöhen können. Als geeignet werden Regeneriermittel angesehen, welche das Säurerestion zusammen mit seiner korrespondierenden Säure enthalten. So sind wässrige Lösungen aus Nitratsalz (z. B. Natriumnitrat) mit Salpetersäure oder aus Sulfatsalz (z. B. Natriumsulfat) mit Schwefelsäure geeignet. Besonders geeignet hat sich eine wässrige Lösung aus einer Natriumchloridlösung (NaCl) mit Salzsäure (HCl) erwiesen. Alternativ kann selbstverständlich auch nur HCl oder nur NaCl verwendet werden, also nur die Säure oder nur das Salz.

Wichtig ist, dass bei der Regeneration der pH-Wert des Anionenaustauschers in der Präkonditionierungseinrichtung nicht erhöht wird, da es sonst zur Feststofffällung kommen würde.

Nach der Regeneration wird vorzugsweise noch mit Wasser gespült und der Anionenaustauscher steht erneut zur Reinigung von Prozessmedium und/oder Spülmedium zur Verfügung.

Vorzugsweise ist vorgesehen, dass die Präkonditionierungseinrichtung zusätzlich zu dem Anionenaustauscher einen weiteren Anionionenaustauscher aufweist, sodass die beiden Anionenaustauscher im Wechsel betrieben und regeneriert werden können.

Dies führt zu einer kontinuierlichen Abgabe von Prozessmedium und/oder Spülmedium, wodurch die Entionisierungsanlage kontinuierlich gespeist und betrieben werden kann.

Vorzugsweise ist vorgesehen, dass die Präkonditioniereinrichtung eine Einrichtung zur Fällung der Komplex-Anionen aus dem Prozessmedium bzw. dem Spülmedium sowie eine anschließende Separationseinrichtung aufweist.

Dies stellt gegenüber dem Anionenaustauscher eine andere Möglichkeit dar, die Entionisierungsanlage vor den Komplex-Anionen zu schützen, die für den Betrieb bzw. die Regeneration der darin enthaltenen Austauscher problematisch und schädlich sind. Dazu wird in der Präkonditionierungseinrichtung ein Fällungsmittel (ggf. auch ein Flockungsmittel und/oder Flockungshilfsmittel) zu dem Prozessmedium und/oder dem Spülmedium hinzugegeben, um die störenden Komplex-Anionen auszufällen. Im einfachsten Fall ist dies ein Mittel um den pH-Wert in den alkalischen Bereich zu verschieben. Das kann zum Beispiel Natronlauge oder Kalkmilch sein.

Als Separationseinrichtungen können unterschiedlichste Verfahren angewendet werden, um die Feststoffe von der Lösung zu separieren. Dies sind beispielsweise Filtration, Sedimenation, Zentrifugen, Zyklone oder ähnliches.

Die Einrichtung zur Fällung und die Separationseinrichtung können auch in einer gemeinsamen Einheit zusammengefasst sein.

Schließlich können der Anionenaustauscher und die Einrichtung zur Fällung und die Separationseinrichtung auch ergänzend vorgesehen werden.

Vorzugsweise ist vorgesehen, dass das Spülmedium mehrerer Spülbecken der Präkonditionierungseinrichtung zugeführt wird.

Dies erlaubt eine weitere Absenkung des Frischwasserbedarfs und/oder eine Verringerung des Installationsaufwands.

Vorzugsweise ist vorgesehen, dass die Oberflächenbehandlungsanlage eine Steuerung aufweist, die dazu eingerichtet ist, die Präkonditionierungseinrichtung derart zu betreiben und zu regenerieren, dass die Komplex-Anionen allenfalls in einer unschädlichen Konzentration in die Entionisierungsanlage gelangen.

Die Steuerung kann dazu auf verschiedene Pumpen, Ventile und/oder ESMR-Messstellen zurückgreifen.

Nach einem anderen Aspekt der Erfindung wird eine Präkonditionierungseinrichtung angegeben, die dazu vorgesehen ist, einer Entionisierungsanlage einer Oberflächenbehandlungsanlage vorgeschaltet zu werden, und die dazu eingerichtet ist, Komplex-Anionen, welche bei einem Dünnschichtkonversionsprozess der Oberflächenbehandlungsanlage entstehen und/oder vorhanden sind, aus einem Prozessmedium und/oder einem Spülmedium zu entfernen.

Eine derartige Präkonditionierungseinrichtung kann in bestehende Oberflächenbehandlungsanlagen eingefügt werden, wenn diese von einem bekannten Phosphatierungsprozess auf einen Dünnschichtkonversionsprozess umgestellt werden sollen. Auf diese Weise kann die bisher verwendete Entionisierungsanlage weiterverwendet werden.

Nach einem anderen Aspekt der Erfindung wird ein Verfahren zum Aufbereiten von Prozessmedium aus einem Dünnschichtkonversionsbeschichtungsprozess in einer Oberflächenbehandlungsanlage und/oder von Spülmedium aus anschließenden Spülschritten mit folgenden Schritten angegeben:
a) Bereitstellen einer Entionisierungsanlage, die
   - einen Kationenaustauscher und einen nachgeschalteten Anionenaustauscher aufweist und
   - dazu eingerichtet ist, das Prozessmedium und/oder das Spülmedium zu entionisieren;
b) Bereitstellen einer Präkonditionierungseinrichtung, die der Entionisierungsanlage eine Präkonditionierungseinrichtung vorgeschaltet ist und die dazu eingerichtet ist, Komplex-Anionen, welche bei dem Dünnschichtkonversionsprozess entstehen und/oder vorhanden sind, aus dem Prozessmedium und/oder dem Spülmedium zu entfernen;
c) Entfernen der Komplex-Anionen aus dem Prozessmedium und/oder dem Spülmedium.

Mit einem solchen Verfahren lassen sich auch bei einem Dünnschichtkonversionsprozess das Prozessmedium und/oder das Spülmedium aufbereiten.

Nach einem anderen Aspekt der Erfindung wird eine Oberflächenbehandlungsanlage zur Behandlung von Gegenständen, insbesondere Fahrzeugkarosserien, angegeben, mit
a) einem Dünnschichtkonversionsprozess, in welchem unter Verwendung eines Prozessmediums eine keramische Dünnschicht auf den Gegenständen aufgebracht wird,
b) einem anschließenden Spülschritt, in welchem die Gegenstände nach dem Dünnschichtkonversionsprozess mit Spülmedium gespült werden, und
c) einer Membranfiltrationsanlage, die
   - dazu eingerichtet ist, das Prozessmedium und/oder das Spülmedium zu entionisieren,
   wobei
d) der Membranfiltrationsanlage eine Präkonditionierungseinrichtung vorgeschaltet ist, die dazu eingerichtet ist, Komplex-Anionen, welche bei dem Dünnschichtkonversionsprozess entstehen und/oder vorhanden sind, aus dem Prozessmedium und/oder dem Spülmedium zu entfernen.

Da die Präkonditionierungseinrichtung auf einfache Weise einer bereits bekannten Entionisierungsanlage vorgeschaltet werden kann, lassen sich die Vorteile der Präkonditionierungseinrichtung auch auf andere Aufbereitungsanlagen wie eine Membranfiltrationsanlage, z.B. eine Umkehrosmose-Anlage, übertragen.

Vorzugsweise lassen sich sämtliche in den unabhängigen Ansprüchen angegebenen zusätzlichen Merkmale, die eine Präkonditionierungseinrichtung vor einer Entionisierungsanlage mit lonentauschern vorteilhaft weiterbilden, auch an der über die Membranfiltrationsanlage abgewandelten Oberflächenbehandlungsanlage verwenden.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine Oberflächenbehandlungsanlage mit einer Entionisierungsanlage und einer erfindungsgemäßen Präkonditionierungseinrichtung;
- Figur 2: eine Oberflächenbehandlungsanlage mit einer Entionisierungsanlage und einer erfindungsgemäßen Präkonditionierungseinrichtung nach einem anderen Ausführungsbeispiel;
- Figur 3: eine Oberflächenbehandlungsanlage mit einer Entionisierungsanlage und einer erfindungsgemäßen Präkonditionierungseinrichtung nach einem weiteren Ausführungsbeispiel.

### BESCHREIBUNG BEVORZUGTER AUSFÜHRUNGSBEISPIELE

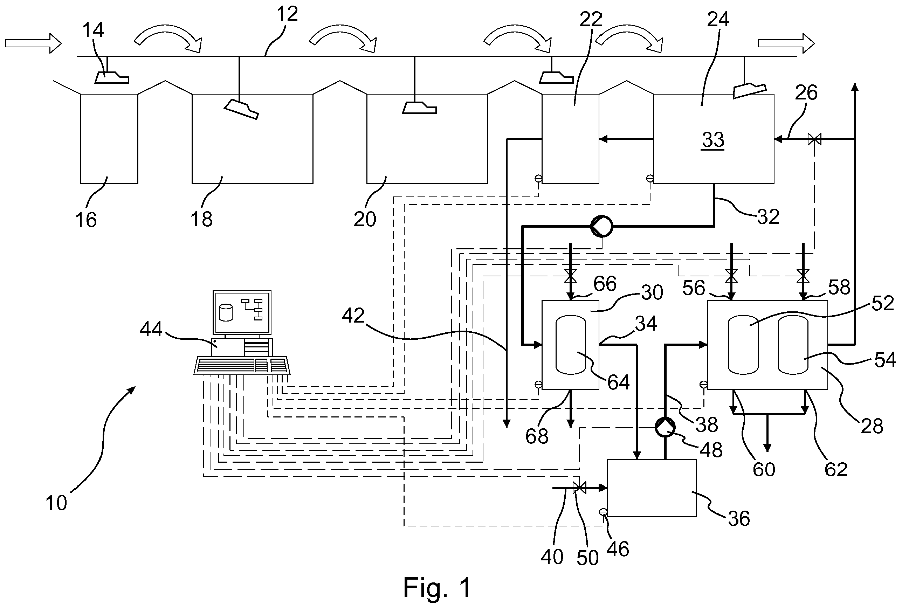

Figur 1 zeigt eine insgesamt mit 10 bezeichnete Oberflächenbehandlungsanlage mit einem Fördersystem 12, welches Gegenstände 14, hier in Form von Fahrzeugkarosserien, durch die einzelnen Behandlungsschritte der Oberflächenbehandlungsanlage führt.

Der in Figur 1 gezeigte Ausschnitt aus der Oberflächenbehandlungsanlage 10 umfasst zunächst zwei Spülbecken 16 und 18, die einem vorhergehenden Behandlungsschritt, beispielsweise einer Reinigung, nachfolgen.

Ferner weist die Oberflächenbehandlungsanlage 10 zur Durchführung eines Dünnschichtkonversionsprozesses ein Dünnschichtkonversionsbecken 20 auf, welches hier als Tauchbecken ausgestaltet ist.

Auf den Dünnschichtkonversionsprozess folgen zwei Spülschritte in Form einer Spülkaskade. Dazu ist hier anschließend an das Dünnschichtkonversionsbecken 20 ein Spritzspülbecken 22 angeordnet, welches mit Überlaufwasser aus dem nachfolgenden Spülbecken 24 betrieben wird, welches als Tauchbecken ausgeführt ist. Das Überlaufwasser kann dabei vom Spülbecken 24 zum Spritzspülbecken 22 überlaufen oder aktiv gepumpt werden.

Das Spülbecken 24 wird hingegen mit vollentsalztem Wasser (VE-Wasser) aus einer Leitung 26 gespeist.

Die Leitung 26 wird wiederum von einer Entionisierungsanlage 28 gespeist, die das VE-Wasser erzeugt und daher häufig auch als VE-Wasseranlage bezeichnet wird.

Die Oberflächenbehandlungsanlage 10 weist ferner eine Präkonditionierungseinrichtung 30 auf.

Die Präkonditionierungseinrichtung 30 wird über eine Ablaufleitung 32 von dem Spülbecken 24 mit verunreinigtem Spülwasser 33 gespeist. Ein Ausgang 34 der Präkonditionierungseinrichtung 30 ist mit einem Rohwassertank 36 verbunden, von welchem wiederum über eine Leitung 38 die Entionisierungsanlage 28 gespeist wird.

Der Rohwassertank 36 weist zusätzlich noch eine Rohwasser-Speiseleitung 40 auf, über welche von der städtischen Wasserversorgung Rohwasser oder Brunnenwasser in die Anlage eingebracht werden kann.

Schließlich führt von dem Spritzspülbecken 22 noch eine Abwasserleitung 42 in eine nicht gezeigte Kanalisation oder eine chemisch-physikalische Abwasserbehandlungsanlage des Betriebes.

Die Oberflächenbehandlungsanlage 10 weist ferner, wie in Figur 1 angedeutet, eine Steuerung 44 auf, die dazu eingerichtet ist, über verschiedenen Messstellen 46, Pumpen 48 und Ventile 50 die Prozesses der Anlage zu überwachen und zu steuern.

Die Entionisierungsanlage 28 weist in ihrem Inneren eine Kationenaustauschersäule 52 sowie eine Anionenaustauschersäule 54 auf. Mithilfe der Kationenaustauschersäule 52 werden positiv geladene Ionen gegen Wasserstoff-Ionen (H⁺-Ionen) ausgetauscht. In der nachfolgenden Anionenaustauschersäule 54 werden hingegen negativ geladene Ionen gegen Hydroxid-Ionen (OH²⁻-Ionen) ausgetauscht. Da die entsprechenden lonenaustauschmaterialien mit der Zeit erschöpft sind, müssen diese von Zeit zu Zeit regeneriert werden. Dazu weist die Entionisierungsanlage für jede Säule einen Regeneriermitteleingang 56 und 58 sowie entsprechende Regeneratausgänge 60 und 62 auf.

Die Präkonditionierungseinrichtung 30 weist im Ausführungsbeispiel nach Figur 1 eine Anionenaustauschersäule 64 mit einem selektiven Austauschermaterial auf. Auch hier sind ein Regeneriermitteleingang 66 sowie ein Regeneratausgang 68 vorgesehen.

Die Oberflächenbehandlungsanlage 10 arbeitet wie folgt:
Im Dünnschichtkonversionsbecken 20 werden die Gegenstände mit einer nanoskaligen Keramikschicht überzogen. Die dabei verwendeten Chemikalien beinhalten Verbindungen von Zirkonium (Zr), Titan (Ti) und Silizium (Si) als Fluoridkomplexe. Dies sind beispielsweise Hexafluorzirkonsäure (H₂ZrF₆), Hexafluortitansäure (H₂TiF₆) und Hexafluorkieselsäure (H₂SiF₆) oder deren leicht lösliche Alkalisalze und/oder Ammoniumsalze. Auch können Dünnschichtkonversionslösungen in Form von (Organo-)Silanen eingesetzt werden.

Diese Verbindungen gelangen durch Verschleppung an den Gegenständen aus dem Dünnschichtkonversionsprozess in die beiden nachfolgenden Spülbecken 22 und 24.

In der Präkonditionierungseinrichtung 30 werden die im ablaufenden Spülwasser 33 enthaltenen Komplex-Anionen aus dem Dünnschichtkonversionsprozess, welche Zirkonium, Titan oder Silizium beinhalten, gegen andere Anionen ausgetauscht, wobei hier generell Säurerestanionen in Frage kommen. In der Anionaustauschsäule 64 der Präkonditionierungseinrichtung 30 findet somit über das selektive Austauschermaterial eine Umsalzung dieser für die Entionisierungsanlage 28 problematischen Komplex-Anionen statt.

Die Säurerestanionen verlassen daraufhin die Präkonditionierungseinrichtung 30 zusammen mit dem übrigen Spülwasser 33 über die Leitung 34 und werden in den Rohwassertank 36 eingebracht. Von dort gelangen sie mit gegebenenfalls frisch zudosiertem Rohwasser zum Erhalt der Gesamtflüssigkeitsmenge im System der Oberflächenbehandlungsanlage 10 in die Entionisierungsanlage 28.

In der Entionisierungsanlage 28 werden in an sich bekannter Weise zunächst die Kationen gegen Wasserstoff-Kationen und anschließend die Anionen gegen die Hydroxid-Anionen ausgetauscht, wobei durch die Umsalzung in der Präkonditionierungseinrichtung 30 in das Austauschermaterial der Entionisierungsanlage 28 für die spätere Regenerierung unproblematische Anionen eingelagert werden.

Die Entionisierungsanlage 28 kann somit in bekannter Art und Weise regeneriert werden und zwar indem die Kationenaustauschersäule 52 sauer regeneriert wird und die Anionenaustauschersäule 54 alkalisch regeneriert wird. Es kommt somit in der Entionisierungsanlage 28 nicht zu einer Verblockung des lonenaustauschermaterials aufgrund einer Ausfällung der Komplex-Anionen bei der alkalischen Regeneration.

Zur Regeneration der Anionenaustauschersäule 66 der Präkonditionierungseinrichtung 30 wird statt einer alkalischen Regeneration eine Regeneration im sauren oder neutralen Bereich durchgeführt. Dazu werden am Regeneriermitteleingang 66 der Anionenaustauschersäule 64 Regeneriermittel eingesetzt, die einen pH-Wert kleiner als 6 haben. Dies kann durch Säurerest-Ionen starker Säuren erreicht werden, da diese den pH-Wert nicht verschieben, wohingegen Säurerest-Ionen mittelstarker bzw. schwacher Säuren den pH-Wert erhöhen würden, wodurch die Komplexanionen in der Anionenaustauschersäule 64 in der Präkonditionierungseinrichtung 30 ausfallen würden.

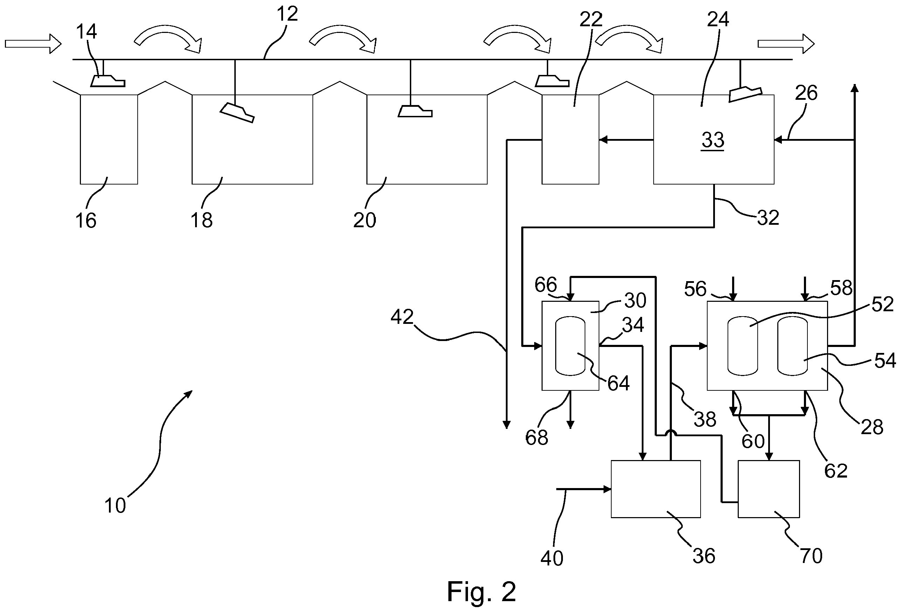

Da bei dem Ausführungsbeispiel nach Figur 1 an der Präkonditionierungseinrichtung 30 im Vergleich zum Stand der Technik zusätzliches Regenerat anfällt, zeigt Figur 2 ein diesbezüglich verbessertes Ausführungsbeispiel, wobei Komponenten ähnlicher oder identischer Funktion mit demselben Bezugszeichen bezeichnet sind.

Wie man der Figur 2 entnehmen kann, wird hier das an der Entionisierungsanlage 28 anfallende Regenerat zumindest in Teilen der Präkonditionierungseinrichtung 30 als Regeneriermittel zugeführt.

Dazu sind die beiden oder auch nur einer der beiden Regeneratausgänge 60, 62 der Entionisierungsanlage 28 mit einem Regenerattank 70 verbunden. Nicht gezeigt ist eine Abzweigmöglichkeit, um Regenerat zu verwerfen anstatt dieses zum Regenerattank 70 zu führen. Der Regenerattank 70 ist ferner mit dem Regeneriermitteleingang 66 der Präkonditionierungseinrichtung 30 verbunden. Es ist dadurch möglich Regeneriermittel mehrfach zu verwenden und/oder den Installationssaufwand zu reduzieren.

Beispielsweise kann die Kationenaustauschersäule 52 mit Salzsäure (HCl) im Überschuss als Regeneriermittel regeneriert werden. Im sogenannten Vorlauf des Regenerats, d.h. zu Beginn der Regeneration, sind dann die Fremdionen aus der Kationenaustauschsäule 52 zunächst in hoher Konzentration enthalten. Dieser Vorlauf des Regenerats kann über die Abzweigmöglichkeit verworfen werden. Danach sinkt die Konzentration der Fremdionen im Regenerat und es wird dann im Regenerattank 70 gesammelt. Das im Regenerattank 70 enthaltene Regenerat hat gegenüber dem Regeneriermittel am Eingang jedoch einen etwas geringeren Säuregehalt, d.h. einen etwas höheren pH-Wert.

Mit dieser weniger konzentrierten Salzsäure als Regeneriermittel wird dann die Anionenaustauschersäule 64 der Präkonditioniereinrichtung 30 gespeist.

Eine andere Möglichkeit besteht darin, die Ionen, die in der Anionenaustauschersäule 64 gegen die Komplex-Anionen getauscht (beispielsweise Cl⁻-Ionen) und über das Rohwasser in die Entionisierungsanlage 28 gelangen, wiederzuverwenden. Denn diese Ionen lagern sich im Normalbetrieb der Entionisierungsanlage 28 zunächst in der Anionenaustauschersäule 54 an und werden gegen OH⁻-Ionen getauscht. Bei der Regeneration können diese Cl⁻-Ionen im Regenerattank 70 gesammelt werden, von wo aus Sie als Regeneriermittel wieder in die Anionenaustauschersäule 64 der Präkonditionierungseinrichtung 30 gelangen. Es entsteht so ein Kreislauf, wodurch sich der Regeneriermittelbedarf reduziert und zusätzlich noch der Rohwasserverbrauch weiter gesenkt wird.

Allerdings sind zusätzliche Messtechnik zur Regeneratüberwachung und weitere Zudosierungsmöglichkeiten notwendig.

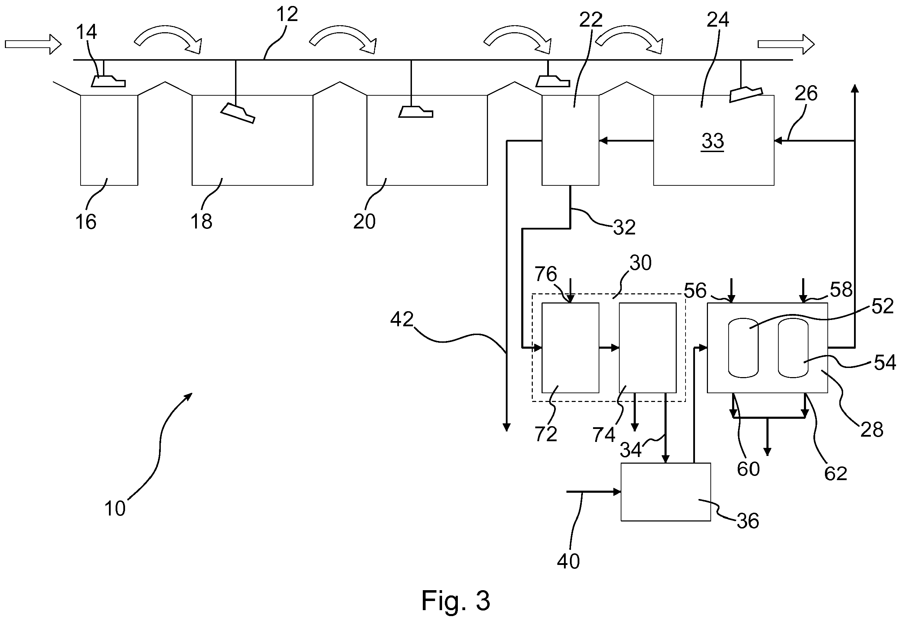

Schließlich zeigt Figur 3 ein weiteres Ausführungsbeispiel, bei welchem die Präkonditioniereinrichtung 30 eine Einrichtung 72 zur Fällung der Komplex-Anionen sowie eine anschließende Separationseinrichtung 74, wie beispielweise eine Sedimentation und/oder Filtration, zum Abtrennen der ausgefällten Feststoffe aus dem wässrigen Spülwasser 33 umfasst.

Bei diesem Ausführungsbeispiel werden somit die für die Entionisierungsanlage 28 problematischen Komplex-Anionen aus dem Dünnschichtkonversionsprozess durch Zugabe entsprechender Fällungschemikalien an einem Fällungsmitteleingang 76 aus dem Spülwasser ausgefällt. Beispielweise kann der pH-Wert ins Alkalische verschoben werden. Auch können Flockungsmittel verwendet werden, die eine Flockung der Feststoffe unterstützen.

Die Separationseinrichtung 74 ist mit dem Rohwassertank 36 verbunden, in welchem das Rohwasser wie bei den vorangegangenen Ausführungsbeispielen für die weitere Aufbereitung in der Entionisierungsanlage 28 gesammelt wird.

Wie aus Figur 3 ferner ersichtlich ist, kann das Spülwasser 33 auch dem Spritzspülbecken 22 entnommen werden. Dies gilt für sämtliche Ausführungsbeispiele.

Je nach Auslegung der Anlage steht es dem Fachmann frei, auch Kombinationen der oben genannten Ausführungsbeispiele vorzunehmen.

So ist es beispielsweise denkbar, im Ausführungsbeispiel nach Figur 3 nach der Separationseinrichtung 74 noch eine Anionenaustauschersäule 64 entsprechend der Figuren 1 und 2 in der Präkonditionierungseinrichtung 30 vorzusehen.

Das Spülwasser kann auch von mehreren Spülbecken 22 und 24 zusammengefasst werden.

Auch ist es grundsätzlich denkbar, das Prozessmedium des Dünnschichtkonversionsprozesses in ähnlicher Weise aufzubereiten. Denn auch für das Dünnschichtkonversionsbeschichtungsbecken 20 kann es bereits sinnvoll sein, ablaufendes Prozessmedium über eine Kombination aus Präkonditionierungseinrichtung 30 und eine Entionisierungsanlage 28 aufzubereiten und/oder zu entsorgen.

In Abwandlung der obigen Ausführungsbeispiele kann als Vorfilter vor der Präkonditionierungseinrichtung zusätzlich oder alternativ zu einem Kiesfilter ein Aktivkohlefilter eingesetzt werden. Dieser kann als adsorptiv wirkender Filter z.B. störende Tenside, Biozide und/oder Desinfektionsmittel entfernen. Insbesondere wenn das erzeugt VE-Wasser nicht nur in den Spülprozess rückgeführt werden soll, sondern auch in anderen Prozessabschnitten eingesetzt werden soll, kann je nach spezifischem Anwendungsfall ein Aktivkohlefilter vorgesehen werden. Auch ein der Präkonditionierungseinrichtung und/oder der Entionisierungsanlage nachfolgender Aktivkohlefilter kann vorteilhaft sein.

Unabhängig vom derzeitigen Gegenstand der Erfindung wurde erkannt, dass eine erfindungsgemäße Präkonditionierungseinrichtung vorteilhaft auch vor einer Membranfiltrationsanlage, z.B. einer Umkehrosmose-Anlage, zur Entfernung von Komplexanionen vorgesehen werden kann. Denn die beschriebenen Komplexanionen können auch dort Störungen durch Membranverblockung (auch Fouling oder Scaling genannt) verursachen. Daher wurden Wässer, welche die Inhaltsstoffe der Dünnschichtkonversion enthalten, bisher nicht über Membranfiltrationsanlagen geführt. Eine vorgeschaltete erfindungsgemäße Präkonditionierungseinrichtung könnte die störenden Komplexanionen auch hier entfernen, wodurch eine weitergehende Entionisierung über die Membranfiltrationsanlage möglich wäre.

In den Figuren wären dann die Entionisierungsanlage 28 als eine Membranfiltrationsanlage 28 mit einer oder mehreren Membranfiltern 52 und 54 aufzufassen.

Die Anmelderin behält sich vor, diesen Gedanken beispielsweise im Rahmen von Teilanmeldungen weiter zu verfolgen.

Insbesondere kann ein erfinderischer Gedanke allgemein darin gesehen werden, aus beliebigen Wässern von Oberflächenbehandlungsanlagen im Rahmen einer Präkonditionierung Komplexanionen mit Hilfe eines Anionenaustauschers zu entfernen, dessen pH-Wert wie beschrieben geführt wird.

## Patentansprüche

1. Oberflächenbehandlungsanlage (10) zur Behandlung von Gegenständen (14), insbesondere Fahrzeugkarosserien, mit
a) einem Dünnschichtkonversionsprozess (20), in welchem unter Verwendung eines Prozessmediums eine keramische Dünnschicht auf den Gegenständen (14) aufgebracht wird,
b) einem anschließenden Spülschritt (22, 24), in welchem die Gegenstände (14) nach dem Dünnschichtkonversionsprozess (20) mit Spülmedium (33) gespült werden, und
c) einer Entionisierungsanlage (28), die
- einen Kationenaustauscher (52) und einen nachgeschalteten Anionenaustauscher (54) aufweist und
- dazu eingerichtet ist, das Prozessmedium und/oder das Spülmedium (33) zu entionisieren,
**dadurch gekennzeichnet, dass**
d) der Entionisierungsanlage (28) eine Präkonditionierungseinrichtung (30) vorgeschaltet ist, die dazu eingerichtet ist, Komplex-Anionen, welche bei dem Dünnschichtkonversionsprozess (20) entstehen und/oder vorhanden sind, aus dem Prozessmedium und/oder dem Spülmedium (33) zu entfernen.

2. Oberflächenbehandlungsanlage nach Anspruch 1, **dadurch gekennzeichnet, dass** die Präkonditionierungseinrichtung (30) einen Anionionenaustauscher (64) aufweist, der dazu eingerichtet ist, die Komplex-Anionen gegen andere Anionen auszutauschen.

3. Oberflächenbehandlungsanlage nach Anspruch 2, **dadurch gekennzeichnet, dass** der Anionenaustauscher (64) der Präkonditionierungseinrichtung (30) ein selektives Austauschermaterial umfasst.

4. Oberflächenbehandlungsanlage nach einem der Ansprüche 2 bis 3, **dadurch gekennzeichnet, dass** der Anionenaustauscher (64) der Präkonditionierungseinrichtung (30) mit einem Regeneriermittel regeneriert wird, dass einen pH-Wert von weniger als circa 6 hat.

5. Oberflächenbehandlungsanlage nach einem der Ansprüche 2 bis 4, **dadurch gekennzeichnet, dass** die Präkonditionierungseinrichtung (30) zusätzlich zu dem Anionenaustauscher (64) einen weiteren Anionionenaustauscher aufweist, sodass die beiden Anionenaustauscher im Wechsel betrieben und regeneriert werden.

6. Oberflächenbehandlungsanlage nach einem der vorhergehenden Ansprüche, **dadurch gekennzeichnet, dass** die Präkonditioniereinrichtung (30) eine Einrichtung (72) zur Fällung der Komplex-Anionen aus dem Prozessmedium bzw. dem Spülmedium (33) sowie eine anschließende Separationseinrichtung (74) aufweist.

7. Oberflächenbehandlungsanlage nach einem der vorhergehenden Ansprüche, **dadurch gekennzeichnet, dass** das Spülmedium (33) mehrerer Spülbecken (22, 24) der Präkonditionierungseinrichtung (30) zugeführt wird.

8. Oberflächenbehandlungsanlage nach einem der vorhergehenden Ansprüche, **dadurch gekennzeichnet, dass** die Oberflächenbehandlungsanlage eine Steuerung (44) aufweist, die dazu eingerichtet ist, die Präkonditionierungseinrichtung (30) derart zu betreiben und zu regenerieren, dass die Komplex-Anionen allenfalls in einer unschädlichen Konzentration in die Entionisierungsanlage (28) gelangen.

9. Präkonditionierungseinrichtung, die dazu vorgesehen ist, einer Entionisierungsanlage (28) einer Oberflächenbehandlungsanlage (10) vorgeschaltet zu werden, und die dazu eingerichtet ist, Komplex-Anionen, welche bei einem Dünnschichtkonversionsprozess (20) der Oberflächenbehandlungsanlage (10) entstehen und/oder vorhanden sind, aus einem Prozessmedium und/oder einem Spülmedium (33) zu entfernen.

10. Verfahren zum Aufbereiten von Prozessmedium aus einem Dünnschichtkonversionsbeschichtungsprozess (20) in einer Oberflächenbehandlungsanlage (10) und/oder von Spülmedium (33) aus anschließenden Spülschritten (22, 24) mit folgenden Schritten:
a) Bereitstellen einer Entionisierungsanlage (28), die
- einen Kationenaustauscher (52) und einen nachgeschalteten Anionenaustauscher (54) aufweist und
- dazu eingerichtet ist, das Prozessmedium und/oder das Spülmedium (33) zu entionisieren;
b) Bereitstellen einer Präkonditionierungseinrichtung (30), die der Entionisierungsanlage (28) vorgeschaltet ist und die dazu eingerichtet ist, Komplex-Anionen, welche bei dem Dünnschichtkonversionsprozess (20) entstehen und/oder vorhanden sind, aus dem Prozessmedium und/oder dem Spülmedium (33) zu entfernen;
c) Entfernen der Komplex-Anionen aus dem Prozessmedium und/oder dem Spülmedium (33).

11. Oberflächenbehandlungsanlage (10) zur Behandlung von Gegenständen (14), insbesondere Fahrzeugkarosserien, mit
a) einem Dünnschichtkonversionsprozess (20), in welchem unter Verwendung eines Prozessmediums eine keramische Dünnschicht auf den Gegenständen (14) aufgebracht wird,
b) einem anschließenden Spülschritt (22, 24), in welchem die Gegenstände (14) nach dem Dünnschichtkonversionsprozess (20) mit Spülmedium (33) gespült werden, und
c) einer Membranfiltrationsanlage (28), die
- dazu eingerichtet ist, das Prozessmedium und/oder das Spülmedium (33) zu entionisieren,
**dadurch gekennzeichnet, dass**
d) der Membranfiltrationsanlage (28) eine Präkonditionierungseinrichtung (30) vorgeschaltet ist, die dazu eingerichtet ist, Komplex-Anionen, welche bei dem Dünnschichtkonversionsprozess (20) entstehen und/oder vorhanden sind, aus dem Prozessmedium und/oder dem Spülmedium (33) zu entfernen.
